# EUROPÄISCHE PATENTSCHRIFT

(11) **EP 2 404 886 B1**
(45) Veröffentlichungstag und Bekanntmachung des Hinweises auf die Patenterteilung: **27.12.2017**
(21) Anmeldenummer: 11172711.1
(22) Anmeldetag: 05.07.2011
(51) Int. Cl.: C04B 28/18, C04B 40/02

(54) **Verfahren und Vorrichtung zur Härtung von Kalk-Sandsteinen oder Porenbetonsteinen**
Method and apparatus for hardening sand lime bricks or porous concrete blocks
Procédé et dispositif pour la préparation de briques silico-calcaires et de pierres en béton poreux

(30) Priorität: 06.07.2010 DE 102010017764
(43) Veröffentlichungstag der Anmeldung: 11.01.2012
(73) Patentinhaber: HoKa Gesellschaft für Entwicklung und Vertrieb elektronischer Schaltungen mbH, 52146 Würselen-Bardenberg (DE)
(72) Erfinder: Hovestadt, Andreas, 52146 Würselen (DE)
(74) Vertreter: Bauer, Dirk

(56) Entgegenhaltungen:
- EP-A1- 0 486 800
- EP-A1- 0 538 755
- DE-A1- 2 000 087
- DE-A1- 3 041 045
- DE-A1- 3 144 789
- DE-A1- 19 534 147
- DE-A1- 19 541 866
- DE-C1- 19 608 974
- US-A- 3 275 724
- US-A- 3 535 407
- US-A- 4 366 121

## Beschreibung

### Einleitung

Die Erfindung betrifft ein Verfahren zur Härtung von Kalk-Sandsteinen, Poren-Betonsteinen o.ä., wobei Rohlinge der Steine in einen Innenraum eines Autoklaven eingebracht werden, dieser druckdicht verschlossen und danach in den Innenraum des Autoklaven unter Druck stehender Wasserdampf eingeleitet wird, der während einer bestimmten Zeit auf die Rohlinge einwirkt, wodurch letztere aushärten, wobei des Weiteren während der Zeit der Einleitung und/oder der Einwirkung des Wasserdampfs an den Rohlingen und an Wandungen des Autoklaven Kondensat anfällt, das zumindest teilweise recycelt wird.

Darüber hinaus betrifft die Erfindung eine Vorrichtung zur Herstellung von Kalk-Sandsteinen, Poren-Betonsteinen o.ä. mit
- einem Autoklaven, in dessen Innenraum Rohlinge der Steine durch eine druckdicht verschließbare Öffnung einbringbar sind,
- einem Dampferzeuger und/oder einem Dampfspeicher, mit bzw. von dem der verschlossene Autoklav mit den darin befindlichen Rohlingen mit unter Druck stehendem Wasserdampf beaufschlagbar ist, wodurch die Rohlinge aushärtbar sind,
- einer Kondensatsammeleinrichtung zum Sammeln des durch die Dampfeinleitung in dem Autoklaven an den dort befindlichen Rohlingen und an den einen Innenraum des Autoklaven begrenzenden Wandungen entstehenden Kondensats.

### Stand der Technik

Bei einer Vielzahl der aktuell in Betrieb befindlichen Vorrichtungen der vorgenannten Art wird das Kondensat entweder in einem Behälter angesammelt und von dort niveaugesteuert abgelassen oder kontinuierlich entsprechend seinem Anfall aus dem Hochdrucksystem der Vorrichtung ausgeschleust.

Die DE 691 047 offenbart ein Verfahren der eingangs genannten Art und eine zu dessen Durchführung geeignete Vorrichtung, wobei der Druck des Dampfkessels unter den Druck des zur Entnahme der Fertigsteine zu öffnenden Autoklaven abgesenkt wird. Über eine von der tiefsten Stelle des Autoklaven zum Wasserraum des Dampferzeugers führende Leitung wird das Kondenswasser in den Heizkessel zurückgedrückt und wieder in den Wasserkreislauf zurückgeführt.

Problematisch ist in diesem Zusammenhang der hohe Kalkgehalt im Kondensat, der dadurch zustande kommt, dass beim Kondensationsvorgang und Ablaufen des Kondensats von den Steinrohlingen Kalk aus letzteren ausgewaschen wird und in Lösung geht. Bei der Verdampfung des Kondensats im Dampferzeuger entstehen infolge dessen Ablagerungen, die den Wärmeübergang behindern und regelmäßig durch Reinigen entfernt werden müssen. Hierdurch entsteht ein nicht unerheblicher Aufwand. Darüber hinaus ist die vorbekannte Verfahrensweise aufgrund gesetzlicher Vorschriften nicht statthaft.

Aus der DE 195 44 238 C1 ist ein Verfahren zur Aufbereitung von Brauchwasser einer KalkSandstein-Härteanlage bekannt, bei der das Kondensat aus der Sammeleinrichtung abgelassen und sodann einem Niederdruckverdampfer zugeführt wird. Dort wird das Kondensat zu Kaltdampf verdampft, der als nächstes einem Kondensator zugeführt und zu Brauchwasserkondensat kondensiert wird. Dieses Brauchwasserkondensat wird in einem nächsten Schritt dann dem Dampferzeuger als Speisewasser zugeführt. Hierdurch wird die Problematik des hohen Kalkgehalts des Kondensats ausgeschaltet, da das Brauchwasserkondensat, das dem Dampferzeuger zugeführt wird, quasi frei von Ionen ist und deshalb beim Verdampfen keine Ablagerungen erzeugt. Als Nachteil ist bei diesem bekannten Verfahren jedoch der Energieaufwand für den Niederdruckverdampfer anzusehen. Darüber hinaus ist der apparative Aufwand vergleichsweise hoch.

Unter energetischen Aspekten stellt ferner das Verfahren gemäß der DE 197 02 430 A1 eine Fortentwicklung des aus der DE 195 44 238 C1 bekannten Verfahrens dar. Gemäß jenem vorbekannten Verfahren wird das Brauchwasser zunächst in einem Sammelbehälter aufgefangen und anschließend in einem ersten Schritt wiederum einem Niederdruckverdampfer zwecks Erzeugung von Kaltdampf zugeführt. Dabei wird das Brauchwasser vor seiner Verdampfung in dem Niederdruckverdampfer über einen Wärmetauscher geführt, um auf diese Weise die Wärmeenergie des Restdampfs aus den Autoklaven nutzen zu können. Darüber hinaus ist aus der DE 197 02 430 A1 ein Verfahren bekannt, bei dem der Restdampf aus den Härtekesseln in einem Wärmetauscher im Wärmeaustausch mit zu erwärmendem Brauchwasser zumindest teilweise kondensiert wird. Hierdurch soll das Volumen des Restdampfs verringert werden, um den energetischen und apparativen Aufwand beim Entleeren der Härtekessel zu verringern. Als weiterer Effekt wird auch der Energieaufwand bei der Niederdruckverdampfung reduziert weil das aufzubereitende Brauchwasser dem Niederdruckverdampfer mit einer gleichmäßig hohen Temperatur zugeführt werden kann.

Auch wenn bei einer Verdampfung des Kondensats Probleme mit Kalkablagerungen im Dampferzeuger nicht mehr auftreten und selbst wenn gegenüber der DE 195 44 238 C1 der energetische Aufwand durch die Nutzung der Wärmeenergie des Restdampfs reduziert wird, ist die Verdampfung und anschließende Kondensierung des Kondensats sowohl unter energetischen als auch unter apparativen Aspekten nicht optimal.

Eine alternative Variante des stofflichen Recyclings des Kondensats ist in der DE 43 13 314 A1 offenbart. Bei diesem vorbekannten Verfahren wird das Kondensat zusammen mit kalkhaltigen Frischwasser einer Fällungsstufe zugeführt, um Kalk zum Karbonat auszufällen. Nach der Fällung wird das solchermaßen erzeugte "saubere" Wasser wieder dem Dampferzeuger zugeführt, wohingegen das Kalziumkarbonat dem Grundgemisch zur Steinherstellung zugegeben wird. Optional soll vor der Zuführung des recycelten Wassers zum Dampferzeuger im Anschluss an die Fällungsstufe eine Entkarbonisierung stattfinden. Der Betrieb derartiger Fällungsstufen hat sich in der Praxis jedoch als finanziell und verfahrenstechnisch aufwendig herausgestellt, selbst wenn auf eine Verdampfungs- und Kondensationsstufe hierbei gänzlich verzichtet werden kann.

Ferner ist aus der DE 1 471 462 A ein Verfahren zum periodischen Behandeln von Zementsteinen mit Dampf bekannt, bei dem die Dampfversorgung des Autoklaven über ein an dessen Boden befindliches Wasserreservoir erfolgt, in dem ein mit Thermoöl beschickter Wärmetauscher angeordnet ist. Während des Behandlungsvorgangs anfallendes Kondensat läuft fortlaufend in das Reservoir zurück und wird von dort während des Betriebs des Wärmetauschers wieder als Dampf in die Autokalvatmosphäre zurückgeführt. Einen eingeständigen externen Dampferzeuger zur Versorgung des Autoklaven mit Frischdampf besitzt diese vorbekannte Vorrichtung nicht. Nach Abschluss eines Härtezyklus wird das zu diesem Zeitpunkt noch am Boden des Autoklaven befindliche Kondensat mittels einer Pumpe in einen externen Kondensat-Speicherraum überführt, ohne dass der Druck des Kondensates dabei reduziert würde. Erst nach Abtrennung des Speicherraums vom Autoklaven wird letzterer belüftet und entleert. Nach einer Bestückung des Autoklaven mit neuen zu härtenden Steinen wird die Verbindung zwischen dem Speicherraum und dem Autoklaven geöffnet, wodurch das heiße, unter Druck stehende Wasser zum Boden des Autoklaven zurückgeführt wird und dort zumindest teilweise verdampft. Auch wenn das bekannte Verfahren in energetischer Hinsicht vorteilhaft ist, ist dessen Ausführung in der Praxis nicht statthaft, da es einer Vorschrift zuwider läuft, derzufolge an einem Druckbehälter zwischen Oberseite und Unterseite keine übermäßigen Temperaturdifferenzen auftreten dürfen, um einen gleichmäßigen Spannungszustand in der gesamten Kesselwandung zu erhalten.

In der DE 195 41 866 A1 wird ein Autoklav dargestellt, in dem Formkörperblöcke gehärtet und getrocknet werden, wobei die Härtung und die Trocknung parallel oder nacheinander stattfinden können. Ferner weist der Autoklav einen so genannten Umwälzer (beispielsweise in Form eines Ventilators) auf, der dazu geeignet ist, in dem Autoklaven befindlichen Wasserdampf umzuwälzen. Hierfür sind jeweils in einem oberen Bereich und einem unteren Bereich eines Innenraums des Autoklaven Dampfschienen angeordnet, durch die ja nach Konfiguration Wasserdampf in den Innenraum eingeblasen oder aus dem Innenraum abgesaugt werden kann. Bei den Dampfschienen handelt es sich um Rohre, deren Mantelflächen perforiert sind. Die Umwälzung des Wasserdampfes erfolgt durch ein kombiniertes Absaugen und Einblasen von Wasserdampf

Mittels des in der DE 195 34 147 A1 soll ein Autoklaven mit eine hohen Energieeffizienz bereitgestellt werden, in dem bei der Härtung der im Autoklaven befindlichen Formsteine anfallendes Kondensat aus dem Innenraum des Autoklaven an einer Sammelstelle abgesaugt wird und in einen Sammelbehälter geleitet wird. Das zwischengespeicherte Kondensat soll im Folgenden eingesetzt werden, um bei einem anschließenden Härteprozess den zwischendurch entleerten Autoklaven erneut vorzuheizen. Hierbei dürfte allerdings ein Druckverlust und damit auch einer Energieverlust auftreten.

Schließlich wird in der UA 3,276,724 ein Verfahren zur Rezirkulation von Kondensat beschrieben, wobei auch hier lediglich der Einsatz zur Aufheizung des Autoklaven im Zuge eines anschließenden Härtungsprozesses angestrebt wird.

### Aufgabe

Der Erfindung liegt die Aufgabe zugrunde, ein Verfahren und eine Vorrichtung zur Härtung von Kalk-Sandsteinen, Porenbetonsteinen und ähnlichem vorzuschlagen, das bzw, die sich durch ein energetisch und verfahrenstechnisch optimiertes Recycling des anfallenden Kondensats auszeichnet.

### Lösung

Die Erfindung betrifft das Verfahren gemäss der Ansprüche 1 - 9 und die Vorrichtung gemäss der Ansprüche 10 - 14.

Ausgehend von einem Verfahren der eingangs genannten Art wird die vorgenannte Aufgabe dadurch gelöst, dass das Kondensat durch eine Leitung aus dem Innenraum des Autoklaven heraus in die Kondensatsammeleinrichtung geleitet und von dort zumindest teilweise, ohne dass dessen Druck zuvor reduziert wird, unmittelbar aus der Kondensatsammeleinrichtung mit Hilfe eines in letzterer angeordneten Wärmetauschers, der in der Kondensatsammeleinrichtung angeordnet ist, über eine Leitung in den Innenraum des Autoklaven zurück verdampft wird und die Kondensatsammeleinrichtung mit dem Innenraum des Autoklaven und mindestens einer Rückführleitung einen zusammenhängenden Raum bildet, in dem derselbe Druck herrscht.
Durch die unmittelbare Rückverdampfung des Kondensats in den Autoklav werden die Energieverluste in Form der im Kondensat befindlichen Energie teilweise zurückgewonnen. Durch die erfindungsgemäße Rückverdampfung entstehen die bei bekannten Verfahren anfallenden Energieverluste deshalb nicht mehr, weil das Kondensat nach der Sammlung nicht aus dem "Hochdrucksystem" entfernt wird, indem sein Druck auf das Niveau des Umgebungsdrucks abgesenkt wird. Wegen der erfindungsgemäß somit vermiedenen Druckerniedrigung, durch die thermodynamisch erhebliche Verluste realisiert werden, ist somit für die Rückverdampfung, d.h. Zuführung des aus dem Kondensat gebildeten Dampfes in den Innenraum des Au toklaven, nur noch die Verdampfungsenthalpie h" und nicht mehr h' notwendig. Das Kondensat wird somit stets auf dem Hochdruckniveau gehalten.

Dabei ist es für den Eintritt des erfindungsgemäßen Erfolgs unerheblich, ob das Kondensat - wie im Stand der Technik üblich - in einem unterhalb des Innenraums des Autoklaven angeordneten Sammelbehälter aufgefangen und von dort zurückverdampft wird oder ob die Kondensatsammeleinrichtung neben dem Autoklaven angeordnet wird und das Kondensat dorthin umgepumpt wird. Die Sammeleinrichtung bildet nach der Erfindung mit dem Innenraum des Autoklaven und einem oder mehreren Verbindungsleitung(en) einen zusammenhängenden Raum, in demderselbe Druck herrscht. Dieser variiert prozessbedingt. Die gemäß der DE 1 471 462 A vorgeschlagene Vorgehensweise, das Kondensat im Innenraum des Autoklaven selbst zu sammeln und von dort aus zurückzuverdampfen wird nicht verwirklicht. Vielmehr ist eine separate Kondensatsammeleinrichtung vorhanden, die nicht von dem unteren Bereich des Autoklaven selbst gebildet wird. Unter Kondensatsammeleinrichtung im Sinne der vorliegenden Anmeldung ist daher zwingend ein separater (Druck-)Behälter zu verstehen, in den das verteilt im Innenraum des gesamten Autoklaven anfallende Kondensat gesammelt (zusammengeführt) und mittels eines (oder möglicherweise auch mittels mehrerer) Wärmetauscher(s) rückverdampft wird. Die Rückverdampfung kann dabei auch in kontinuierlicher Betriebsweise erfolgen, das heißt es findet keine Akkumulation des Kondensats statt, sondern die Sammelrate entspricht - bedarfsweise während des gesamten Zyklus - der Rückverdampfungsrate. Es ist aber auch ein chargenweiser Betrieb in dem Sinn möglich, dass erst eine gewisse Menge des Kondensats gesammelt und anschließend diese Menge (vollständig) rückverdampft wird. Ebenso kann Kondensat aus parallel betriebenen Autoklaven in diese Kondensatsammeleinrichtung geleitet werden.

Erfindungswesentlich ist dabei, dass sich der Innenraum des Autoklaven und die Kondensatsammeleinrichtung auf demselben Druckniveau befinden, so dass also Drosselverluste, wie sie beim Ablassen des Kondensats nach den vorbekannten Verfahren üblich sind, nicht auftreten. Kondensatsammeleinrichtung und Innenraum des Autoklaven bilden somit unter Druckgesichtspunkten eine Einheit.

Der oder die Verbindungsquerschnitt(e) kann bzw. können von einer einzigen, im Querschnitt hinreichend groß dimensionierten Leitung gebildet werden, die dann sowohl eine Kondensatleitung zur Ableitung des Kondensats aus dem Autoklaven in die Kondensatsammeleinrichtung als auch eine Rückführleitung zur Rückführung des aus dem Kondensat erzeugten und wieder dem Autoklaven zugeführten Dampfes darstellt. Bevorzugt sind jedoch mindestens zwei Verbindungsleitungen zwischen dem der Kondensatsammeleinrichtung und dem Innenraum des Autoklaven vorhanden, wobei eine vom Querschnitt her kleiner zu bemessende Kondensatleitung vom Boden des Autoklaven - bedarfsweise unter Zwischenschaltung eines geodätisch tiefer liegenden Zwischenbehälters mit Niveauregulierung und einer Pumpe - in die Kondensatsammeleinrichtung führt. Eine weitere Leitung mit entsprechend größerem Querschnitt, die so genannte Rückführleitung, dient sodann zur Rückführung des aus dem Kondensat gebildeten Dampfes in dem Autoklaven.

Um die Energieeffizienz weiter zu erhöhen wird erfindungsgemäß vorgeschlagen, die für die Rückverdampfung des Kondensats erforderliche Energie aus dem Abdampf eines anderen, zeitversetzt betriebenen Autoklaven oder aus Frischdampf zu beziehen.

Darüber hinaus ist es besonders sinnvoll, wenn die für die Rückverdampfung des Kondensats erforderliche Energie in einem Energiespeicher, vorzugsweise in Form eines Öl-, PCM- (Phase Change Material) oder Ruthsspeichers zwischengespeichert wird. Dabei liegt es im Rahmen der Erfindung, dass ein für die Rückverdampfung des Kondensats verwendeter Wärmetauscher mit Dampf oder Öl oder einem anderen Wärmeträgermedium betrieben wird. Grundsätzlich sind auch elektrisch betriebene Heizelemente möglich, wenngleich energetisch betrachtet meist nicht sinnvoll. Bei einem Betrieb mit Dampf kann unmittelbar auf Frischdampf aus dem Dampferzeuger oder aus einem Energiespeicher zurückgegriffen werden, was prozesstechnisch besonders einfach ist. Die Verwendung eines anderen Wärmeträgermediums bietet sich an.

Eine weitere Reduzierung des Energiebedarfs kann realisiert werden, wenn erfindungsgemäß die Wärmeenergie, die nach Abschluss des Härtungsvorgangs in dem in der Kondensatsammeleinrichtung befindlichen Kondensat und Dampf enthalten ist, in einen Energiespeicher übertragen wird, aus dem heraus die Wärmeenergie zu Beginn der Rückverdampfung wieder dem zu verdampfenden Kondensat zugeführt wird. Auch die Wärmeenergie desjenigen Anteils des Kondensats, das nicht wieder rückverdampft wurde, sowie des Restdampfs in der Kondensatsammeleinrichtung, kann auf die vorbeschriebene Weise unter Verwendung eines Energiespeichers wiederverwendet werden.

Um in der Phase der Druckreduzierung in dem Autoklaven den Zeitbedarf dieses Prozessschritts zu vermindern kann erfindungsgemäß der Kondensatsammeleinrichtung in einer Phase der Druckabsenkung in dem Autoklaven flüssiges Wasser, vorzugsweise in fein verteilter Form und mit möglichst niedriger Temperatur, zugeführt werden. Hierdurch findet in Folge der schnellen Temperaturerniedrigung eine starke Volumenabnahme des Dampfes statt, so dass es zu einem sehr raschen Druckabbau in dem Autoklaven kommt. Die Kondensatsammeleinrichtung mit ihrem vergleichsweise großen Volumen wird somit dazu genutzt, den Druckabbau in dem Autoklaven zu begünstigen, ohne dass in den Autoklaven selbst Wasser eingebracht werden müsste. Dies wäre nämlich insofern nachteilig, als die Steine zum Ende des Härtungsprozesses nass würden, wodurch sich das Handling nach Abschluss des Härtungsvorgangs erschweren würde.

In verfahrenstechnischer Hinsicht wird darüber hinaus erfindungsgemäß vorgeschlagen, dass in der Kondensatsammeleinrichtung in einer Phase der Druckerhöhung über eine Wärmezufuhr zu dem Wärmetauscher Dampf überhitzt und anschließend dem Innenraum des Autoklaven zugeführt wird. In der Bedampfungsphase kann auf diese Weise durch Verwendung überhitzten Dampfes (statt Sattdampfs) eine Steintrocknung erzielt werden, was bei der Vorgehensweise nach dem Stand der Technik ohne Verwendung eines zusätzlichen Überhitzers nicht möglich ist, da dort lediglich die Zufuhr von Sattdampf möglich ist.

Um sowohl eine wirksame Rückführung des rückverdampften Kondensats in den Innenraum des Autoklaven und eine homogene Verteilung desselben dort zu bewirken als auch um im Falle der Steintrocknung mittels überhitzen Dampfes eine homogene Dampfverteilung im Autoklaven zu erzielen, sollte zwischen der Kondensatsammeleinrichtung und dem Innenraum des Autoklaven eine Zirkulationsströmung über eine Rückführleitung und eine Zirkulationsleitung erzeugt werden. Beide verlaufen insofern parallel zueinander, als sie eine Verbindung zwischen Kondensatsammeleinrichtung und dem Innenraum des Autoklaven herstellen, jedoch bei Vorliegen einer Zirkulationsströmung in entgegengesetzte Richtungen durchströmt werden, wobei ein erforderliches Druckgefälle zur Erzeugung der Zirkulationsströmung mit Hilfe einer Druckerhöhungseinrichtung, insbesondere eines Ventilators, in einer der beiden vorgenannten Leitungen aufgebaut wird.

In vorrichtungstechnischer Hinsicht wird die zugrunde liegende Aufgabe gelöst durch
- einen Wärmetauscher, der in der Kondensatsammeleinrichtung angeordnet ist, mit dem das in der Kondensatsammeleinrichtung befindliche Kondensat verdampfbar ist, und
- eine Leitung, insbesondere eine Rückführleitung, durch die der aus dem Kondensat erzeugte Dampf von der Kondensatsammeleinrichtung in den Innenraum des Autoklaven rückführbar ist, und
- die Kondensatsammeleinrichtung mit dem Innenraum des Autoklaven und mindestens einer Rückführleitung einen zusammenhängenden Raum bildet, in dem derselbe Druck herrscht..

Die erfindungsgemäße Vorrichtung ermöglicht es, eine Rückverdampfung des Kondensats durchzuführen, ohne dass zuvor der Druck des Kondensats abgesenkt wird, d.h. dass das Kondensat aus dem Innenraum des Autoklaven bzw. einer druckmäßig damit kommunizierenden Kondensatsammeleinrichtung entfernt wird. In energetischer Hinsicht wird somit eine deutlich verbesserte Prozessführung erzielt, wodurch nicht unerhebliche Energiemengen eingespart werden können. Allein der Umstand, dass ein Ablassen, d.h. eine Druckminderung bei dem Kondensat vermieden wird, kann eine Energieeinsparung zwischen ca. 6 % und 14 % im Vergleich mit den bekannten Verfahren erzielt werden. Auch in stofflicher Hinsicht ist das erfindungsgemäße Verfahren und die zu dessen Durchführung geeignete Vorrichtung von Vorteil, da das Kondensat zumindest teilweise nicht aus dem Zyklus herausgenommen werden muss, wie dies durch Einleitung des abgekühlten Kondensats in Teiche Usus ist. Die Vorteile der Reduzierung sowohl der Abwassermenge als auch der benötigten Frischwassermenge haben die erfindungsgemäße Vorrichtung und das erfindungsgemäße Verfahren somit mit dem bekannten Prinzip der Niederdruckverdampfung und anschließenden Rückkondensation gemein.

Die erfindungsgemäße Rückführleitung kann dabei grundsätzlich auch von einer Kondensatleitung gebildet werden, falls diese in Bezug auf ihren Querschnitt hinreichend groß bemessen und frei von Strömungshindernissen ist. In diesem Fall verlässt das Kondensat den Innenraum des Autoklaven durch die "Rückführleitung" in die Kondensatsammeleinrichtung, wohingegen der durch Rückverdampfung des Kondensats erzeugte Dampf die Kondensatsammeleinrichtung durch eben diese Rückführleitung in Richtung des Innenraums des Autoklaven verlässt.

In einer Art Gegenstromprinzip findet somit zeitlich versetzt, aber möglicherweise auch zeitlich parallel eine Durchströmung der Rückführleitung in beide Richtungen statt. Vorzugsweise sollte jedoch eine zusätzlich zu der Rückführleitung verlaufende Kondensatleitung vorhanden sein, durch die das in dem Autoklaven anfallende Kondensat in die Konden satsammeleinrichtung leitbar ist. Die Kondensatleitung kann einen wesentlich kleineren Querschnitt besitzen als die für die größeren Dampfvolumina auszulegende Rückführleitung. Die Rückführleitung kann dabei so geführt werden, dass diese an einer möglichst günstigen Stelle in den Innenraum des Autoklaven mündet, so dass eine möglichst homogene Verteilung des rückverdampften Kondensats erfolgt. Bei getrennten Leitungen in Form einer Kondensatleitung und einer Rückführleitung ist es des Weiteren möglich, in die Kondensatleitung eine Pumpe zu integrieren, um die Kondensatsammeleinrichtung auch oberhalb des Bodenniveaus des Autoklaven anordnen zu können. Hierdurch können teure Erdarbeiten reduziert werden, die ansonsten für die Anordnung der Kondensatsammeleinrichtung unterhalb des Innenraums des Autoklavens erforderlich wären, um eine allein durch die Schwerkraft bedingte Kondensatführung zu erhalten.

Darüber hinaus eignet sich die Erfindung auch dazu, vorhandene Vorrichtungen nachzurüsten, um die vorgeschlagene "Hochdruck-Rückverdampfung" realisieren zu können. Bei bekannten Anlagen ist häufig unterhalb des Autoklaven bereits ein vom Volumen her relativ kleiner Sammelbehälter für das Kondensat vorhanden, von dem aus das Kondensat niveaugesteuert abgepumpt wird. Um das Prinzip der Erfindung nutzen zu können, ist es lediglich erforderlich, oberirdisch eine Kondensatsammeleinrichtung mit entsprechend großem Volumen und integriertem Wärmetauscher zu errichten, um von dort aus das Kondensat über eine neu zu erstellende, hinreichend groß dimensionierte Rückführleitung in Dampfform wieder dem Autoklaven zuzuführen.

Eine Weiterbildung der erfindungsgemäßen Vorrichtung besteht ferner darin, eine Zirkulationsleitung vorzusehen, die den Innenraum des Autoklaven mit der Kondensatsammeleinrichtung verbindet sowie darüber hinaus einen vorzugsweise in der Zirkulationsleitung oder in der Rückführleitung oder in der Kondensatleitung angeordneten Ventilator vorzusehen, mittels dessen ein den Innenraum des Autoklaven und die Kondensatsammeleinrichtung durchströmende Zirkulationsströmung zu erzeugen. Auf diese Weise kann sowohl im Falle einer beabsichtigten Steintrocknung mittels überhitzten Dampfs als auch bei der bloßen Rückverdampfung des Kondensats eine möglichst homogene Verteilung des Dampfs in dem Autoklaven sowie hinreichende Überström-Volumenströme erzielt werden.

Schließlich sieht die Erfindung noch vor, dass als Wärmetauscher für die Rückverdampfung des Kondensats ein Plattenwärmetauscher, vorzugsweise einer der so genannten "Pillow Plates"-Bauweise, verwendet wird. Die Innenräume der "Pillow Plates" werden von dem jeweiligen Wärmeträgermedium (Dampf, Öl etc.) durchströmt, während sich die "Pillow Plates" als solche in dem Kondensat befinden und von diesem zumindest teilweise umgeben sind. Kalkbedingte Ablagerungen an den Außenseiten der "Pillow Plates" lösen sich aufgrund der speziellen Oberflächengeometrie weitgehend selbstständig ab, bevor größere, den Wärmeübergang spürbar behindernde Schichtdicken erreicht werden.

Nach der Erfindung wird schließlich noch vorgeschlagen, dass die Kondensatsammeleinrichtung mit dem Wärmetauscher gleichzeitig auch den Dampferzeuger bildet. Bei hinreichend groß dimensioniertem Wärmetauscher und gleichfalls hinreichend groß dimensionierter Kondensatsammeleinrichtung sowie einer in diese führenden Frischwasserleitung kann in diesem Fall ganz auf einen separaten Dampferzeuger verzichtet werden. Insbesondere für neu zu erstellende Anlagen resultieren hieraus nicht unerhebliche Kostenvorteile.

### Ausführungsbeispiel

Das erfindungsgemäße Verfahren wird nachfolgend anhand von zwei Vorrichtungen, die in schematischer Weise in der Zeichnung dargestellt sind, näher erläutert.

Es zeigt:
- Fig. 1:: Ein Schaltschema einer ersten Vorrichtung zur Härtung von Kalk-Sandsteinen und
- Fig. 2:: das Schaltschema einer alternativen Vorrichtung.

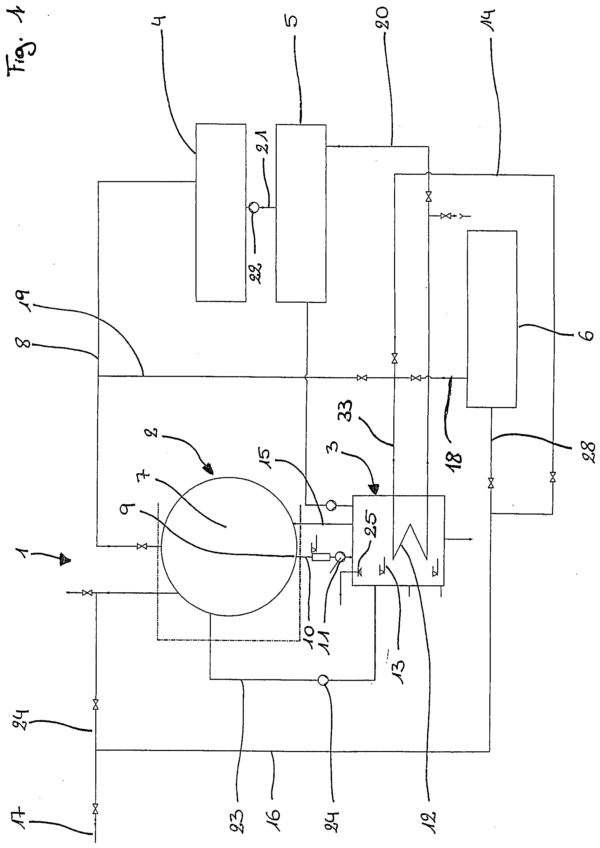

Eine in Figur 1 in einem Schaltschema veranschaulichte Vorrichtung 1 zur Härtung von Kalk-Sandsteinen weist einen Autoklaven 2, eine Kondensatsammeleinrichtung 3, einen Dampferzeuger 4, einen Speisewasserbehälter 5 und einen Dampfspeicher 6 als wesentliche Komponenten auf. Darüber hinaus umfasst die Vorrichtung 1 eine Vielzahl von Leitungen sowie Pumpen und auch einen Ventilator, wobei auf letztgenannte Komponenten an späterer Stelle näher eingegangen wird.

Bei dem Autoklaven 2 handelt es sich um einen langgestreckten zylindrischen Druckbehälter, der stirnseitig mit jeweils einer druckdicht verschließbaren türartigen Öffnung versehen ist. Auf in Schienen geführten Loren sind in einen Innenraum 7 des Autoklaven 2 Rohlinge von Kalk-Sandsteinen oder Porenbeton-Steinen einbringbar, um diese durch eine Behandlung mit unter Druck stehendem Wasserdampf auszuhärten. Während die Beschickung des Autoklaven 2 von einer ersten Stirnseite her erfolgt, werden die gehärteten Kalk-Sandsteine nach Abschluss der Behandlung auf der gegenüber liegenden Stirnseite aus dem Autokalven 2 herausgefahren.

Nachdem eine Charge zu behandelnder Rohlinge in den Innenraum 7 des Autoklaven 2 eingebracht und die stirnseitigen Öffnungen dicht verschlossen wurden, wird über eine von dem Dampferzeuger 4 in den Innenraum 7 des Autoklaven 2 führende Leitung 8 Frischdampf in den Autoklaven eingeleitet. Bedarfsweise kann vor Beginn der Dampfeinleitung der Innenraum 7 des Autoklaven 2 (teilweise) evakuiert werden, um möglicherweise störende Komponenten der Umgebungsluft zu entfernen. Während der Dampfeinleitung werden Temperatur und Druck in dem Autoklaven 2 nach bestimmten Funktionen geregelt erhöht.

Da die Rohlinge zu Beginn der Behandlung eine vergleichsweise geringe Ausgangstemperatur besitzen und auch die Wandungen des Autoklaven 2 selbst noch vergleichsweise kühl sind, schlägt sich an den Autoklavwandungen sowie an den Rohlingen Kondenswasser nieder, das sich schwerkraftbedingt im Bodenbereich des Autoklaven 2 sammelt. Von einer tiefsten Stelle 9 im Innenraum 7 des Autoklaven 2 führt eine Kondensatleitung 10 zu der Kondensatsammeleinrichtung 3 außerhalb des Autoklavs, bei der es sich ähnlich wie bei dem Autoklaven 2 um einen druckfesten und gasdichten Behälter handelt. Um die Kondensatsammeleinrichtung 3 auch geodätisch höher als den Boden des Autoklaven 2 anordnen zu können, ist in der Kondensatleitung 10 eine Pumpe
11 angeordnet, die das Kondensat in die Kondensatsammeleinrichtung 3 fördert.

Erfindungsgemäß befindet sich innerhalb der Kondensatsammeleinrichtung 3 mindestens ein Wärmetauscher 12, der bei maximalem Füllstand des sich in der Kondensatsammeleinrichtung 3 ansammelnden Kondensats (Niveau 13) vollständig unterhalb des Kondensatspiegels befindet.

Im Zuge der beginnenden Dampfeinleitung in den Innenraum 7 des Autoklaven 2 bildet sich in der Anfangsphase, in der Druck und Temperatur in dem Autoklaven 2 kontinuierlich ansteigen, fortlaufend Kondensat, das durch die Kondensatleitung 10 in die Kondensatsammeleinrichtung 3 geleitet wird. Sobald ein gewisser Mindestfüllstand in der Kondensatsammeleinrichtung 3 erreicht ist, kann der Wärmetauscher 12 über eine Leitung 33 mit Dampf versorgt werden, um das Kondensat aus der Kondensatsammeleinrichtung 3 über eine Rückführleitung 15 in den Innenraum 7 des Autoklaven 2 zurückzuverdampfen.

In der Anfangsphase der Rückverdampfung, in der die Temperatur und der Druck in dem Innenraum 7 des Autoklaven 2 noch vergleichsweise gering sind, wird der Wärmetauscher 12 über eine Leitung 16 sowie die weiteren Leitungen 14 und 33 mit Abdampf bzw. Restdampf aus einem anderen, nicht in der Figur 1 gezeigten Autoklaven versorgt, der zu dem in Figur 1 gezeigten Autoklaven zeitversetzt betrieben wird. Sobald die Temperatur des Restdampfs zur Rückverdampfung des Kondensats mittels des Wärmetauschers 12 in der Kondensatsammeleinrichtung 3 nicht mehr ausreicht oder im Parallelbetrieb zur Restdampfnutzung, wird durch Umschaltung entsprechender Ventile über eine Leitung 18 Dampf aus dem Dampfspeicher 6 entnommen. Alternativ hierzu ist aber auch eine direkte Versorgung des Wärmetauschers 12 mit Frischdampf über die Leitungen 8 und 19 in die Leitung 33 möglich. Über eine Leitung 20 wird der im Wärmetauscher 12 kondensierte Dampf in den Speisewasserbehälter 5 zurückgeführt, von wo aus er über eine in einer Leitung 21 angeordnete Druckerhöhungspumpe 22 dem Dampferzeuger 4 zugeführt wird. Eventuell ist vor dem Speisewasserbehälter 5 ein Dampfkühler vorzusehen, insbesondere wenn der Wärmetauscher 12 mit Frischdampf betrieben wird. Das zurückgeführte Kondensat aus dem Frischdampf zeichnet sich durch seine große Reinheit aus.

Der im Innenraum 7 des Autoklaven 2 zugeführte Frischdampf in Form von Sattdampf kann mit Hilfe des Wärmetauschers 12 bedarfsweise überhitzt werden, um beispielsweise in der Bedampfungsphase des Härtungsprozesses eine Trocknung der Steine zu bewirken. Hierzu wird eine eventuell noch in der Kondensatsammeleinrichtung 3 vorhandene Kondensat-Restmenge abgelassen. Dann wird ein in einer Zirkulationsleitung 23 angeordneter Ventilator 24 in Betrieb gesetzt, wodurch sich eine Zirkulationsströmung in der Form ergibt, dass der überhitzte Dampf durch die Rückführleitung 15 von der Kondensatsammeleinrichtung 3 in den Innenraum 7 des Autoklaven 2 geführt wird, und darin befindlicher Dampf über die Zirkulationsleitung 23 und den Ventilator 24 in die Kondensatsammeleinrichtung 3 strömt. Mit dem Wärmetauscher 12 steht somit für die Komponente "Autoklav" eine zusätzliche vom Dampferzeuger 4 unabhängige Energiequelle bzw. Wärmequelle zur Verfügung, die drucktechnisch zwar mit dem Innenraum 7 des Autoklaven 2 verbunden ist, jedoch aufgrund ihrer Anordnung in der separaten Komponente "Kondensatsammeleinrichtung" zu keinem Verlust an nutzbarem Volumen des Innenraums 7 des Autoklaven 2 führt. Falls gewünscht, kann die Kondensatsammeleinrichtung 3 mit dem Wärmetauscher 12 auch als alleiniger Dampferzeuger genutzt werden, so dass kein weiterer, separater Dampferzeuger 4 benötigt wird. Eine Versorgung der Kondensatsammeleinrichtung 3 mit Frischwasser ist dann notwendig.

So wie der Abdampf/Restdampf aus einem anderen Autoklaven über die Leitung 17 zum Wärmetauscher 12 des Autoklaven 2 leitbar ist, um die Abdampf-/Restdampfverluste zu minimieren, so wird auch der Abdampf/Restdampf aus dem Autoklaven 2 über eine Leitung 24 und die Leitung 17 zu dem Wärmetauscher anderer, zeitversetzt betriebener Autoklaven, geleitet.

Um in der Endphase des Härtungsprozesses, in der Druck und Temperatur im Innenraum 7 des Autoklaven 2 wieder gesenkt werden, die Druckabsenkung zu beschleunigen, ohne die in dem Autoklaven 2 befindlichen Kalk-Sandsteine zu befeuchten, kann der in der Kondensatsammeleinrichtung 3 oberhalb des aktuellen Kondensatspiegels befindliche Dampf durch Einsprühen von kaltem Wasser über eine Sprüheinrichtung 25 niedergeschlagen werden. Auch in dieser Betriebsart kann mit Hilfe des Ventilators 24 eine Zirkulation erzeugt werden, so dass der gesamte Dampf aus dem Innenraum 7 des Autokalven 2 in dem oberen Bereich der Kondensatsammeleinrichtung 3 mit kaltem Wasser berieselt werden kann. Auf diese Weise wird eine rasche Druckabsenkung in dem Autoklaven 2 erreicht.

Bei dem Wärmetauscher 12 handelt es sich um einen Plattenwärmetauscher der so genannten "Pillow Plates"-Bauart. Hierbei handelt es sich um Wärmetauscherplatten, die nach Art von gesteppten Kissen über die Fläche verteilte Stellen aufweisen, an denen die gegenüber liegenden Mantelbleche durch Laserschweißen miteinander verbunden sind, wobei die Wärmetauscherplatten während des Herstellungsprozesses durch Druckbeaufschlagung kissenförmig ausgewölbt werden. Pillow-Plates-Wärmetauscher zeichnen sich durch ihre große Unempfindlichkeit gegenüber Ablagerungen, insbesondere auch gegenüber Kalkablagerungen, aus. Sich an den Oberflächen der Wärmetauscherplatten bildende Kalkablagerungen blättern aufgrund der speziellen Geometrie der Oberfläche im Betrieb ab, so dass sich keine großen, den Wärmeübergang behindernde Schichtdicken einstellen können. Der Selbstreinigungseffekt wird erzielt durch geringfügige Formänderungen der gewölbten Wärmetauscherplatten und dem Einfluss wechselnder Druck- und Temperaturbeaufschlagung des Wärmetauschers 12. Erforderlichenfalls ist zu Reinigungszwecken auch eine kurzzeitige Druckbeaufschlagung über die im normalen Betrieb auftretenden Maximaldrücke hinaus möglich, um eine hinreichende Verformung zu erhalten. Alternaiv kann der Wärmetauscher 12 auch durch Zugabe einer Reinigungschemikalie (z.B. Säure) zu dem Kondensat durch einen Zulaufanschluss des Autoklaven 2 abgereinigt werden. Um die sich im Bereich des Bodens der Kondensatsammeleinrichtung 3 ansammelnden Kalkablagerungen entfernen zu können, besitzt ein Gehäuse der Kondensatsammeleinrichtung 3 eine druckdicht verschließbare Tür, durch die eine Zugangsmöglichkeit zu einem Innenraum der Kondensatsammeleinrichtung 3 und insbesondere auch zu den Platten des Wärmetauschers 12 besteht.

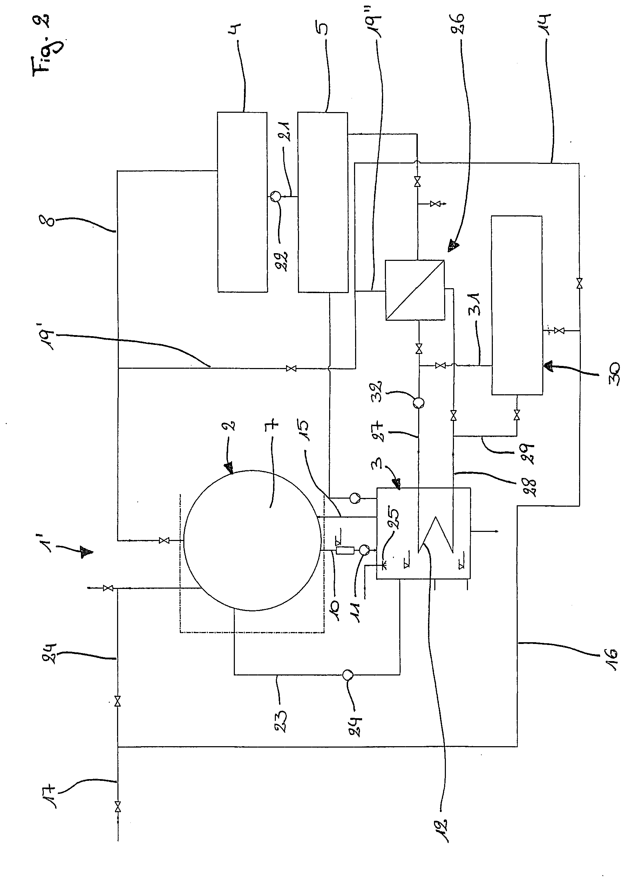

In Unterscheidung zu der Vorrichtung 1 gemäß Figur 1 besitzt die alternative Vorrichtung 1' gemäß Figur 2, die ebenfalls zum Härten von Kalk-Sandsteinen vorgesehen ist, einen Wärmetauscher 26, in dem Wärmeenergie des Frischdampfs über eine Leitung 19' und 19" in Austausch mit einem zweiten Wärmeträgermedium, insbesondere Thermoöl, gebracht wird. Das Thermoöl zirkuliert über Leitungen 27, 28 von dem Wärmetauscher 26 in den im Inneren der Kondensatsammeleinrichtung 3 befindlichen Wärmetauscher 12 zur Kondensatrückverdampfung und von dort wieder zurück in den Wärmetauscher 26. Insbesondere in der Endphase der Autoklavaufheizung ist somit über den Frischdampf eine Versorgung des Wärmetauschers 12 mit der erforderlichen hohen Temperatur sichergestellt. Während der Anfangsphase der Aufheizung wird das Thermoöl hingegen nicht über den Wärmetauscher 26 geführt, sondern über eine von der Leitung 28 abzweigende Leitung 29 zu einem bildlich nicht in Figur 2 dargestellten weiteren Wärmetauscher, der sich in einem Energiespeicher 30 befindet, und von dort über eine in die Leitung 27 mündende Leitung 31 zurück in den Wärmetauscher 12. Die Zirkulation des Thermoöls wird durch eine Pumpe 32 sichergestellt. Die Beladung des Energiespeichers 30 erfolgt auf zweierlei verschiedene Weisen: Zum einen wird über die Leitung 16 Abdampf/Restdampf aus einem weiteren zeitversetzt betriebenen aber in Figur 2 nicht dargestellten Autoklaven in den Wärmespeicher eingeführt. Darüber hinaus kann der Energiespeicher 30 aber auch dadurch befüllt werden, dass nach Abschluss des Härtungsprozesses noch die in der Kondensatsammeleinrichtung 3 befindliche Energie des heißen Restkondensats über die Leitungen 28, 29 in den Wärmespeicher 30 geführt wird und über die Leitungen 31, 32 in den Wärmetauscher 12 rezirkuliert. Auf diese Weise lässt sich die Energiebilanz des Härtungsverfahrens weiter optimieren.

Um die Speicherkapazität des Energiespeichers 30 zu erhöhen, kann dieser alternativ zu Öl oder anderen Wärmespeichermedien insbesondere auch so genanntes PCM-Material (Phase Change Material) enthalten, insbesondere in Form spezieller Wachse, deren Schmelztemperatur so gewählt ist, dass während des Beladens ein Phasenübergang von dem festen in den flüssigen Aggregatzustand stattfindet und bei der Entladung in umgekehrter Weise.

Im Übrigen stimmt der Aufbau der Vorrichtung 1' im Wesentlichen mit dem der Vorrichtung 1 gemäß Figur 1 überein. Gleiche Bauteile sind mit gleichen Bezugszeichen versehen.

### Bezugszeichenliste

- 1, 1': Vorrichtung
- 2: Autoklav
- 3: Kondensatsammeleinrichtung
- 4: Dampferzeuger
- 5: Speisewasserbehälter
- 6: Dampfspeicher
- 7: Innenraum
- 8: Leitung
- 9: Stelle
- 10: Kondensatleitung
- 11: Pumpe
- 12: Wärmetauscher
- 13: Niveau
- 14: Leitung
- 15: Rückführleitung
- 16: Leitung
- 17: Leitung
- 18: Leitung
- 19, 19', 19": Leitung
- 20: Leitung
- 21: Leitung
- 22: Druckerhöhungspumpe
- 23: Zirkulationsleitung
- 24: Ventilator
- 25: Sprüheinrichtung
- 26: Wärmetauscher
- 27: Leitung
- 28: Leitung
- 29: Leitung
- 30: Energiespeicher
- 31: Leitung
- 32: Pumpe
- 33: Leitung

## Patentansprüche

1. Verfahren zur Härtung von Kalk-Sandsteinen oder Porenbetonsteinen, wobei Rohlinge der Steine in einen Innenraum (7) eines Autoklaven (2) eingebracht werden, dieser druckdicht verschlossen und danach in den Innenraum (7) des Autoklaven (2) unter Druck stehender Wasserdampf geleitet wird, der anschließend während einer bestimmten Zeit auf die Rohlinge einwirkt, wodurch letztere aushärten, wobei des Weiteren während der Zeit der Einleitung und/oder Einwirkung des Wasserdampfs an den Rohlingen und an Wandungen des Autoklaven (2) Kondensat anfällt, das in eine Kondensatsammeleinrichtung (3) geleitet und zumindest teilweise recycelt wird, **dadurch gekennzeichnet, dass** das Kondensat durch eine Leitung (10) aus dem Innenraum (7) des Autoklaven (2) heraus in die Kondensatsammeleinrichtung (3) geleitet und von dort zumindest teilweise, ohne dass dessen Druck zuvor reduziert wird, unmittelbar aus der Kondensatsammeleinrichtung (3) mit Hilfe eines in letzterer angeordneten Wärmetauschers (12), der in der Kondensatsammeleinrichtung (3) angeordnet ist, über eine Rückführleitung (15) in den Innenraum (7) des Autoklaven (2) zurückverdampft wird und die Kondensatsammeleinrichtung (3) mit dem Innenraum (7) des Autoklaven (2) und mindestens einer Rückführleitung (15) einen zusammenhängenden Raum bildet, in dem derselbe Druck herrscht.

2. Verfahren nach Anspruch 1, **dadurch gekennzeichnet, dass** das Kondensat über eine Kondensatleitung (10) aus dem Autoklaven (2) herausgeleitet und das rückverdampfte Kondensat über eine davon getrennte Rückführleitung (15) in den Autoklaven (2) zurückgeleitet wird.

3. Verfahren nach Anspruch 1 oder 2, **dadurch gekennzeichnet, dass** die für die Rückverdampfung des Kondensats erforderliche Energie aus dem Abdampf eines anderen, zeitversetzt betriebenen Autoklaven und/oder aus Frischdampf bezogen wird.

4. Verfahren nach einem der Ansprüche 1 bis 3, **dadurch gekennzeichnet, dass** die für die Rückverdampfung des Kondensats erforderliche Energie in einem Energiespeicher (30), vorzugsweise in Form eines Öl-, PCM- (Phase-Change-Material) oder eines Ruthsspeichers zwischengespeichert wird.

5. Verfahren nach einem der Ansprüche 1 bis 4, **dadurch gekennzeichnet, dass** ein für die Rückverdampfung des Kondensats verwendeter Wärmetauscher (12) mit Dampf oder Öl oder einem anderen Wärmeträgermedium betrieben wird.

6. Verfahren nach einem der Ansprüche 1 bis 5, **dadurch gekennzeichnet, dass** die Wärmeenergie, die nach Abschluss des Härtungsvorgangs in dem in der Kondensatsammeleinrichtung (3) befindlichen Kondensat und Dampf enthalten ist, in einen Energiespeicher (30) übertragen wird, aus dem heraus zu Beginn der Rückverdampfung Wärmeenergie wieder dem verdampften Kondensat zugeführt wird,

7. Verfahren nach einem der Ansprüche 1 bis 6, **dadurch gekennzeichnet, dass** in einer Phase der Absenkung des Drucks in dem Autoklaven (2) der Kondensatsammeleinrichtung (3) in deren oberen Bereich flüssiges Wasser, vorzugsweise in fein verteilter Form und mit niedriger Temperatur, zugeführt wird.

8. Verfahren nach einem der Ansprüche 1 bis 7, **dadurch gekennzeichnet, dass** in einer Phase der Erhöhung des Drucks in dem Autoklaven in der Kondensatsammeleinrichtung (3) durch Wärmezufuhr zu dem Wärmetauscher (12) Dampf überhitzt und dem Innenraum (7) des Autoklaven (2) zugeführt wird,

9. Verfahren nach einem der Ansprüche 1 bis 8, **dadurch gekennzeichnet, dass** zwischen der Kondensatsammeleinrichtung (3) und dem Innenraum (7) des Autoklaven (2) eine Zirkulationsströmung durch eine Rückführleitung (15) und eine Zirkulationsleitung (23) erzeugt wird.

10. Vorrichtung (1, 1') zur Härtung von Kalk-Sandsteinen oder Porenbetonsteinen mit
- einem Autoklaven (2), in dessen Innenraum (7) Rohlinge der Steine durch eine druckdicht verschließbare Öffnung einbringbar sind,
- einem Dampferzeuger (4) und/oder einem Dampfspeicher (6) mit dem bzw. von dem der verschlossene Autoklav (2) mit den darin befindlichen Rohlingen mit unter Druck stehendem Wasserdampf beaufschlagbar ist, wodurch die Rohlinge aushärtbar sind,
- einer Kondensatsammeleinrichtung (3) zum Sammeln des durch die Dampfeinleitung in den Autoklaven (2) an den dort befindlichen Rohlingen und an den einen Innenraum des Autoklaven (2) begrenzenden Wandungen entstehenden Kondensats,
**gekennzeichnet durch**
- einen Wärmetauscher (12), der in der Kondensatsammeleinrichtung (3) angeordnet ist, mit dem das in der Kondensatsammeleinrichtung (3) befindliche Kondensat verdampfbar ist und
- eine Rückführleitung (15), durch die der aus dem Kondensat erzeugte Dampf von der Kondensatsammeleinrichtung (3) in den Innenraum (7) des Autoklaven (2) rückführbar ist, und
- die Kondensatsammeleinrichtung (3) mit dem Innenraum (7) des Autoklaven (2) und mindestens einer Rückführleitung (15) einen zusammenhängenden Raum bildet, in dem derselbe Druck herrscht.

11. Vorrichtung nach Anspruch 10, **gekennzeichnet durch** eine zusätzlich zu der Rückführleitung (15) verlaufende Kondensatleitung (10), durch die das in dem Autoklaven (2) anfallende Kondensat in die Kondensatsammeleinrichtung (3) leitbar ist.

12. Vorrichtung nach Anspruch 10 oder 11, **gekennzeichnet durch** eine Zirkulationsleitung (23), die den Innenraum (7) des Autoklaven (2) mit der Kondensatsammeleinrichtung (3) verbindet und einen vorzugsweise darin oder in der Rückführleitung (15) oder in der Kondensatleitung (10) angeordneten Ventilator (24) mittels dessen ein den Innenraum (7) des Autoklaven (2) und die Kondensatsammeleinrichtung (3) durchströmender Zirkulationsstrom Erzeugbar ist.

13. Vorrichtung nach einem der Ansprüche 10 bis 12, **dadurch gekennzeichnet, dass** der für die Rückverdampfung des Kondensats verwendete Wärmetauscher (12) ein Plattenwärmetauscher in einer "Pillow Plates"-Bauart ist.

14. Vorrichtung nach einem der Ansprüche 10 bis 13, **dadurch gekennzeichnet, dass** die Kondensatsammeleinrichtung (3) mit dem Wärmetauscher (12) gleichzeitig auch den Dampferzeuger bildet.

## Claims

1. A method for curing sand-lime bricks or aerated concrete bricks, wherein unfinished bricks are introduced into an inside (7) of an autoclave (2), said autoclave is sealed in a pressure-tight manner and then pressurized steam is conducted into the inside (7) of the autoclave (2), which steam then acts on the unfinished bricks for a given time, as a result of which said unfinished bricks cure, wherein furthermore, during the period of the introduction and/or action of the steam, condensation occurs on the unfinished bricks and on the walls of the autoclave (2) which is conducted into a condensate collection device (3) and at least partially recycled, **characterized in that** the condensate is conducted through a line (10) from the inside (7) of the autoclave (2) into the condensate collection device (3) and from there at least partially, without the pressure thereof being reduced beforehand, directly from the condensate collection device (3) with the help of a heat exchanger (12) arranged in said condensate collection device, which heat exchanger is arranged in the condensate collection device, evaporated back via a recirculating line (15) into the inside (7) of the autoclave (2) and the condensate collection device (3) forms a coherent space in which the same pressure prevails along with the inside (7) of the autoclave (2) and at least one recirculating line (15).

2. The method according to claim 1, **characterized in that** the condensate is conducted out via a condensate line (10) from the autoclave (2) and the re-evaporated condensate is conducted back via a recirculating line (15) separated therefrom into the autoclave (2).

3. The method according to claim 1 or 2, **characterized in that** the energy required for the re-evaporation of the condensate is obtained from the waste steam from another autoclave operated in a time-delayed manner and/or from fresh steam.

4. The method according to one of claims 1 to 3, **characterized in that** the energy required for the re-evaporation of the condensate is temporarily stored in an energy store (30), preferably in the form of an oil or PCM (Phase Change Material) store or a Ruth's accumulator.

5. The method according to one of claims 1 to 4, **characterized in that** a heat exchanger (12) used for the re-evaporation of the condensate is operated using steam or oil or another heat transfer medium.

6. The method according to one of claims 1 to 5, **characterized in that** the heat energy which is contained following completion of the curing process in the condensate and steam located in the condensate collecting device (3) is transferred into an energy store (30) from which heat energy is conducted back again to the evaporated condensate at the start of the re-evaporation.

7. The method according to one of claims 1 to 6, **characterized in that** during a pressure-lowering phase in the autoclave (2), liquid water, preferably in finely distributed form and at a low temperature, is supplied in the condensate collecting device (3) in the upper region thereof.

8. The method according to one of claims 1 to 7, **characterized in that** during a pressure-increasing phase in the autoclave, steam is overheated in the condensate collection device (3) through the supply of heat to the heat exchanger (12) and supplied to the inside (7) of the autoclave (2).

9. The method according to one of claims 1 to 8, **characterized in that** between the condensate collection device (3) and the inside (7) of the autoclave (2) a circulation flow is produced by a recycling line (15) and a circulation line (23).

10. A device (1, 1') for the curing of sand-lime bricks or aerated concrete bricks having
- an autoclave (2), into the inside (7) whereof unfinished bricks can be introduced through an opening that can be sealed in a pressure-tight manner,
- a steam generator (4) and/or a steam store (6) with which or from which the sealed autoclave (2) with the unfinished bricks located therein is exposed to pressurized steam, as a result of which the unfinished bricks can be cured,
- a condensate collection device (3) for collecting the condensate occurring through the introduction of steam into the autoclave (2) on the unfinished bricks located there and on the walls delimiting the inside of the autoclave (2),
**characterized by**
- a heat exchanger (12) which is arranged in the condensate collecting device (3), with which the condensate located in the condensate collection device (3) can be evaporated and
- a recirculating line (15) through which the steam generated from the condensate can be recycled from the condensate collection device (3) into the inside (7) of the autoclave (2) and
- the condensate collection device (3) forms a coherent space in which the same pressure prevails with the inside (7) of the autoclave (2) and at least one recirculating line (15).

11. The device according to claim 10, **characterized in that** a condensate line (10) running in addition to the recirculating line (15) through which the condensate occurring in the autoclave (2) can be conducted into the condensate collection device (3).

12. The device according to claim 10 or 11, **characterized by** a circulation line (23) which connects the inside (7) of the autoclave (2) to the condensate collection device (3) and a fan (24) preferably arranged therein or in the recirculating line (15) or in the condensate line (10) by means of which a circulation flow passing through the inside (7) of the autoclave (2) and the condensate collection device (3) can be produced.

13. The device according to one of claims 10 to 12, **characterized in that** the heat exchanger (12) used for the re-evaporation of the condensate is a pillow-plate type of heat exchanger.

14. The device according to one of claims 10 to 13, **characterized in that** the condensate collection device (3) with the heat exchanger (12) simultaneously also forms the steam generator.

## Revendications

1. Procédé destiné à faire durcir des briques silico-calcaires ou des briques en béton cellulaire,
lors duquel on introduit des ébauches des briques dans un espace intérieur (7) d'un autoclave (2), on ferme celui-ci de manière étanche à la pression et on introduit ensuite dans l'espace intérieur (7) de l'autoclave {2) de la vapeur d'eau sous pression, qui par la suite agit pendant un certain temps sur les ébauches, ce qui a pour effet de faire durcir ces dernières, par ailleurs, pendant le temps de l'introduction et/ou de l'action de la vapeur d'eau, il se produit sur les ébauches et sur les parois de l'autoclave (2) des condensats qui sont dirigés dans un dans un système collecteur de condensats (3) et au moins partiellement recyclés, **caractérisé en ce que** les condensats sont dirigés à travers d'un conduit (10) hors de l'espace intérieur (7) de l'autoclave (2) dans le système collecteur de condensats (3) et de là, au moins en partie, sans que leur pression ne soit préalablement réduite, directement hors du système collecteur de condensats (3), à l'aide d'un échangeur thermique (12) placé dans ce dernier, lequel est placé dans le système collecteur de condensats (3), par l'intermédiaire d'un conduit de recirculation sont réévaporés dans l'espace intérieur (7) de l'autoclave (2) et le système collecteur de condensats (3) forme avec l'espace intérieur (7) de l'autoclave (2) et au moins un conduit de recirculation (15) un espace cohérent dans lequel règne la même pression.

2. Procédé selon la revendication 1, **caractérisé en ce que** les condensats sont dirigés par l'intermédiaire d'un conduit à condensats (10) hors de l'autoclave (2) et **en ce que** les condensats réévaporés sont redirigés par l'intermédiaire d'un conduit de recirculation {15) séparé de celui-ci dans l'autoclave (2.

3. Procédé selon la revendication 1 ou 2, **caractérisé en ce qu'**on prélève l'énergie nécessaire pour la réévaporation des condensats dans la vapeur d'échappement d'un autre autoclave fonctionnant en différé et/ou dans de la vapeur fraîche.

4. Procédé selon l'une quelconque des revendications 1 à 3, **caractérisé en ce qu'**on entrepose l'énergie nécessaire pour la réévaporation des condensats dans un accumulateur d'énergie (30), de préférence sous la forme d'un accumulateur d'huile, de PCM (Phase-Change-Material) ou d'un accumulateur Ruth.

5. Procédé selon l'une quelconque des revendications 1 à 4, **caractérisé en ce qu'**on fait fonctionner un échangeur thermique (12) utilisé pour la réévaporation des condensats à la vapeur ou à l'huile ou avec un autre milieu caloporteur.

6. Procédé selon l'une quelconque des revendications 1 à 5, **caractérisé en ce qu'**on transfère l'énergie thermique qui est obtenue après l'achèvement du processus de durcissement dans les condensats et la vapeur se trouvant dans le système collecteur de condensats (3) dans un accumulateur d'énergie (30), hors duquel, au début de la réévaporation, on réalimente de l'énergie thermique vers les condensats évaporés.

7. Procédé selon l'une quelconque des revendications 1 à 6, **caractérisé en ce que** dans une phase de la baisse de la pression dans l'autoclave (2), on alimente dans le système collecteur de condensats (3), dans la région supérieure de celui-ci de l'eau liquide, de préférence sous forme finement dispersée et à basse température.

8. Procédé selon l'une quelconque des revendications 1 à 7, **caractérisé en ce que** dans une phase de montée en pression dans l'autoclave, on surchauffe de la vapeur dans le système collecteur de condensats (3), par apport de chaleur vers l'échangeur thermique (12) et on l'alimente vers l'espace intérieur (7) de l'autoclave (2}.

9. Procédé selon l'une quelconque des revendications 1 à 8, **caractérisé en ce qu'**entre le système collecteur de condensats (3) et l'espace intérieur (7) de l'autoclave (2), un courant de circulation est créé par un conduit de recirculation (15) et un conduit de circulation (23).

10. Dispositif (1, 1') destiné à faire durcir des briques silico-calcaires ou des briques en béton cellulaire, avec
- un autoclave (2), dans l'espace intérieur (7) duquel on peut introduire des ébauches des briques à travers une ouverture fermable de manière étanche à la pression,
- un générateur de vapeur (4) et/ou un accumulateur de vapeur (6) avec lequel ou par lequel l'autoclave (2) fermé avec les ébauches se trouvant en son intérieur peut être exposé à de la vapeur d'eau sous pression, suite à quoi les ébauches peuvent durcir,
- un système collecteur de condensats (3) destiné à collecter des condensats produits par l'introduction de vapeur dans l'autoclave (2) sur les ébauches qui s'y trouvent et sur les parois délimitant un espace intérieur de l'autoclave (2),
**caractérisé par**
- un échangeur thermique (12), qui est placé dans le système collecteur de condensats (3), à l'aide duquel les condensats se trouvant dans le système collecteur de condensats (3) peuvent être évaporés et
- un conduit de recirculation (15) à travers lequel la vapeur créée à partir des condensats peut être redirigée du système collecteur de condensats (3) dans l'espace intérieur (7) de l'autoclave (2) et
- le système collecteur de condensats (3) avec l'espace intérieur {7) de l'autoclave (2) et au moins un conduit de recirculation (15) forment un espace cohérent, dans lequel règne la même pression.

11. Dispositif selon la revendication 10, **caractérisé par** un conduit à condensats (10) s'écoulant en supplément du conduit de recirculation (15} à travers lequel les condensats produits dans l'autoclave (2) peuvent être dirigés dans le système collecteur de condensats (3).

12. Dispositif selon la revendication 10 ou 11, **caractérisé par** un conduit de circulation (23), qui relie l'espace intérieur {7} de l'autoclave (2) avec le système collecteur de condensats (3) et un ventilateur (24) placé de préférence dans celui-ci ou dans le conduit de recirculation (15) ou dans le conduit à condensats {10), au moyen duquel un courant de circulation traversant l'espace intérieur (7) de l'autoclave (2) et le système collecteur de condensats (3) peut être créé.

13. Dispositif selon l'une quelconque des revendications 10 à 12, **caractérisé en ce que** l'échangeur thermique (12) utilisé pour la réévaporation des condensats est un échangeur thermique à plaques de type « Pillow Plates ».

14. Dispositif selon l'une quelconque des revendications 10 à 13, **caractérisé en ce que** le système collecteur de condensats (3) forme avec l'échangeur thermique (12) simultanément aussi le générateur de vapeur.
